# EUROPÄISCHE PATENTSCHRIFT

(11) **EP 2 083 992 B1**
(45) Veröffentlichungstag und Bekanntmachung des Hinweises auf die Patenterteilung: **03.08.2016**
(21) Anmeldenummer: 06829005.5
(22) Anmeldetag: 10.11.2006
(51) Int. Cl.: B29C 67/00

(54) **KONTINUIERLICHES GENERATIVES VERFAHREN UND VORRICHTUNG ZUR HERSTELLUNG EINES DREIDIMENSIONALEN OBJEKTS**
CONTINUOUS, GENERATIVE METHOD AND APPARATUS FOR THE PRODUCTION OF A THREE-DIMENSIONAL OBJECT
PROCÉDÉ GÉNÉRATIF CONTINU ET DISPOSITIF POUR LA FABRICATION D'UN OBJET TRIDIMENSIONNEL

(43) Veröffentlichungstag der Anmeldung: 05.08.2009
(73) Patentinhaber: Envisiontec GmbH, 45968 Gladbeck (DE)
(72) Erfinder: SHKOLNIK, Alexandr, Los Angeles, CA 90046 (US); EL-SIBLANI, Ali, Dearborn Heights, MI 48127 (US); JOHN, Hendrik, 46569 Hünxe (DE)
(74) Vertreter: Prüfer & Partner mbB Patentanwälte · Rechtsanwälte
(86) Internationale Anmeldenummer: PCT/EP2006/010819
(87) Internationale Veröffentlichungsnummer: WO 2008/055533

(56) Entgegenhaltungen:
- WO-A-01/72501
- WO-A-96/00422
- DE-A1- 19 929 199
- JP-A- 4 371 829
- US-A1- 2003 205 849

## Beschreibung

### Anwendungsgebiet

Die Erfindung betrifft ein Verfahren und eine Vorrichtung zur Herstellung eines dreidimensionalen Objekts durch Verfestigen eines Materials, der durch Eintrag stimulierender Energie wie elektromagnetischer Strahlung verfestigbar ist. Das verfestigbare Material umfaßt üblicherweise einen Kunststoff, der photopolymerisierbar bzw. lichthärtbar ist.

### Stand der Technik

Für den schritt- oder schichtweisen Aufbau dreidimensionaler Objekte aus photo- und insbesondere lichthärtenden Polymeren bzw. Kunststoffen werden in der Literatur unterschiedlichste Verfahren angegeben, siehe hierzu "Automated Fabrication - Improving Productivity in Manufacturing" von Marshall Burns, 1993 (ISBN 0-13-119462-3).

Bei herkömmlichen Stereolithographie-Systemen befindet sich zum Beispiel eine Trägerplattform innerhalb eines mit photopolymerisierbarem bzw. lichthärtbarem Material gefüllten Beckens, wobei eine Schicht an der Oberfläche des Materials selektiv z.B. mittels eines scannenden Laserstrahls bis zu einer definierten Schichtdicke ausgehärtet wird. Nach Aushärtung einer Schicht wird die Trägerplattform um die folgende Schichtdicke abgesenkt und eine neue Schicht unausgehärteten Materials aufgetragen.

Bei der selektiven Belichtung durch Laser, das eine punktuelle Energiezufuhr einschließt und bei der nicht die gesamte Baufläche in einem Mal oder annähernd einem Mal belichtet wird, muss in separaten Schichten ausgehärtet und mit der Trägerplatte verfahren werden, um Baufehler zu vermeiden und möglichst akkurate Bauteile zu erzielen. Durch den Aufbau in Schichten mußte das herkömmliche Stereolithographieverfahren in einer Vielzahl entsprechender Schritte pro Schicht ablaufen.

WO 01/72 501 A1 offenbart ein Verfahren gemäß dem Oberbegriff der Ansprüche 1 und 3 und eine Vorrictung gemäß dem Oberbegriff der Ansprüche 7 und 8.

### Aufgabe der Erfindung

Aufgabe der Erfindung ist es, ein verbessertes Verfahren und eine verbesserte Vorrichtung zur Herstellung eines dreidimensionalen Objekts durch Verfestigen eines Materials, der durch Eintrag stimulierender Energie wie elektromagnetischer Strahlung verfestigbar ist, bereitzustellen.

### Zusammenfassung der Erfindung

Diese Aufgabe wird gelöst durch ein Verfahren mit den Merkmalen nach Anspruch 1 oder 3, bzw. durch eine Vorrichtung mit den Merkmalen nach Anspruch 7 oder 8. Bevorzugte Weiterbildungen des erfindungsgemäßen Verfahrens bzw. der erfindungsgemäßen Vorrichtung sind in den Unteransprüchen angegeben.

Gemäß einem ersten Aspekt stellt die vorliegende Erfindung bereit: ein Verfahren zur Herstellung mindestens eines dreidimensionalen Objekts gemäß dem Anspruch 1.

Gemäß einem weiteren Aspekt stellt die vorliegende Erfindung bereit: Verfahren zur Herstellung mindestens eines dreidimensionalen Objekts gemäß dem Anspruch 3.

Gemäß einem weiteren Aspekt stellt die vorliegende Erfindung eine Vorrichtung zur Herstellung mindestens eines dreidimensionalen Objekts durch Verfestigen eines photopolymerisierbaren Materials gemäß dem Anspruch 7 bereit.

Gemäß einem noch anderen Aspekt stellt die vorliegende Erfindung eine Vorrichtung zur Herstellung mindestens eines dreidimensionalen Objekts durch Verfestigen eines photopolymerisierbaren Materials gemäß dem Anspruch 8 bereit.

Durch Anwenden des erfindungsgemäßen Verfahrens ist es möglich, mindestens ein dreidimensionales Objekt bereitzustellen, das aus einem durch elektromagnetische Strahlung photopolymerisierten Material durch kontinuierliches Polymerisieren des photopolymerisierbaren Materials gebildet wurde, jedoch ohne Bildung irgendwelcher getrennt polymerisierter Strukturelemente, die Schichten, Punkte oder Stränge des Materials einschließen könnten.

Durch die hier verwendete Bezeichnung "mindestens" ein dreidimensionales Objekt ist gemeint, daß das erfindungsgemäße Verfahren dazu verwendet werden kann, ein vollständiges 3D-Objekt oder nur ein Teil eines gesamten 3D-Objekts zu bilden, oder mehrere dreidimensionale Objekte oder Teilobjekte zeitgleich oder zeitlich verschieden zu bilden, einschließlich einen Fall, bei dem mehrere Teilstrukturen eines komplexen Objekts zeitgleich oder zeitlich verschieden gebildet werden. Mit den Ausdrücken "Teilobjekt" oder "Teilstrukturen" sind nicht nur gewollte Strukturen des dreidimensionalen Endobjekts gemeint, sondern auch Stützobjekte oder -strukturen, die nur prozeßtechnisch generiert werden und im dreidimensionalen Endobjekt nicht mehr enthalten sind.

### Beschreibung der Erfindung und deren Vorteile

Im Rahmen der vorliegenden Erfindung wurde überraschend gefunden, daß entgegen der herkömmlichen Stereolithographietechnik auf eine vollkommen schichtweise Generierung des dreidimensionalen Objekts verzichtet werden kann; daß vielmehr eine schichtenunabhängige Betriebsweise durchgeführt und die Vorrichtung entsprechend ausgestaltet werden kann.

Durch die erfindungsgemäße Lösung und durch die bevorzugten Weiterbildungen werden herkömmliche Verfahren und Vorrichtungen des Stands der Technik verbessert, und es können die nachfolgend beschriebenen Merkmale vorgesehen bzw. die jeweils angegebenen Vorteile - allein, alternative oder in Kombination - erzielt werden:
Während eines ununterbrochenen Belichtungsvorganges, d.h. während mindestens einer Bestrahlungsphase, und vorzugsweise während des gesamten Bauprozesses des dreidimensionalen Objekts kann sich der Abstand der Trägerplatte für das dreidimensionale Objekt von der Bauebene kontinuierlich, d.h. ohne Unterbrechung, ändern.

Dadurch kann erfindungsgemäß auf ein Verfestigen des Materials in einem Prozess mit vielen Schritten und jeweils pro Schritt erfolgter Schichtbildung verzichtet werden. Falls aufgrund von etwaigen Belichtungsunterbrechungen doch noch leichte Grenzschichten auftreten, so kann eine solche Grenzschichtbildung auf eine geringe Zahl minimiert werden oder sogar ganz eliminiert werden; z.B. begrenzt auf Übergänge unterschiedlicher Bestrahlungsflächen oder auf die Umschaltung auf unterschiedliche Bitmaps pro Bestrahlungsebene, die jeweils für verschiedene Strukturbereiche des dreidimensionalen Objekts verwendet werden.

Ferner wird erfindungsgemäß der Bauprozess beschleunigt.

Durch Unterbleiben einer Schichtbauweise kann ferner auf die Generierung von geschnittenen (sliced) Bilddaten verzichtet werden.

Die erfindungsgemäße kontinuierliche Änderung des besagten Abstands kann je nach gewünschter Ausführungsform realisiert werden, indem die Trägerplatte von der Bauebene weg bewegt wird, und/oder indem die Bauebene bzw. der Füllstand des photopolymerisierbaren Materials von der Trägerplatte weg bewegt wird. Letzteres kann im Fall einer Bestrahlung von oberhalb der Trägerplatte durch Anheben der Bauebene bzw. Anheben des Füllstandes des photopolymerisierbaren Materials gegenüber der Trägerplatte erfolgen. Ein Wegbewegen der Trägerplatte von der Bauebene ist erfindungsgemäß bevorzugt.

Wenn der besagte Abstand erfindungsgemäß während eines Belichtungsvorgangs und vorzugsweise während des gesamten

Bauprozesses des dreidimensionalen Objekts kontinuierlich verändert wird, können Abstufungen in der Hauptbaurichtung (vertikale Z-Richtung) - anders als im herkömmlichen schichtweisen Prozess - reduziert und vorteilhaft minimiert werden, gegebenenfalls sogar auf eine kontinuierliche Abstufung bis hin zur Stufenfreiheit eingestellt werden. Anders als im herkömmlichen schichtweisen Prozess sind keine durch vorbestimmte Schichten festgelegte, diskrete Abstufungen in Z erforderlich. Vielmehr sind Abstufungen in der Z-Baurichtung flexibel je nach Baubedingungen steuerbar und gegebenenfalls variabel einstellbar oder sogar in einer kontinuierlichen Struktur ausführbar.

Das dreidimensionale Objekt kann in der Hauptbaurichtung (normalerweise die Z-Richtung) verfestigen bzw. wachsen, ohne daß jeweils der Eintrag von elektromagnetischer Energie während einer Bestrahlungsphase und gegebenenfalls während des gesamten Bauprozesses unterbrochenen wird. Das derartige kontinuierliche Anwachsen von verfestigtem Material in Z-Richtung während einer Bestrahlungsphase kann folglich über eine übliche, durch den angewandten Eintrag von elektromagnetischer Energie (Bestrahlung) und/oder durch ein verwendetes photopolymerisierbares Material festgelegte Durchhärtetiefe hinaus erfolgen, die bei der herkömmlichen schichtweisen Verfestigung realisierbar war. Durch diese erfindungsgemäße Arbeitsweise ist es daher möglich, Bestrahlungsphasen gegenüber der herkömmlichen schichtweisen Bestrahlung signifikant zu verlängern und während dieser Phasen kontinuierliche, einheitliche Verfestigungstiefen zu erreichen, die herkömmliche Schichten-Verfestigungstiefen von üblicherweise im Mikrometerbereich um ein Vielfaches übersteigen. Eine erfindungsgemäß mit jeweils einer Bestrahlungsphase realisierbare kontinuierliche, einheitliche Verfestigungstiefe kann zum Beispiel in Größenordnungen im Bereich von deutlich über 1mm liegen, bevorzugt bei über 2,5mm, weiter bevorzugt bei über 1cm und insbesondere bei über 10cm. Falls gewünscht kann durch Vermeiden von substantiellen Bestrahlungsunterbrechungen sogar im gesamten dreidimensionalen Objekt eine kontinuierliche (ununterbrochene), einheitliche Verfestigung in Masse bereitgestellt werden.

Durch die schichtenunabhängige, kontinuierliche Betreibsweise ist es erfindungsgemäß sogar möglich, eine momentane Durchhärtetiefe des photopolymerisierbaren Materials gezielt zu beeinflussen und zu steuern. Besonders geeignete Mittel zur Steuerung der Durchhärtetiefe ist die Einstellung der Verfahrgeschwindigkeit der das zu generierende Objekt tragenden Trägerplattform von der Bauebene weg, und die Einstellung der Strahlungsintensität pro Pixels (Graustufe oder Farbwert), jeweils allein oder in Kombination.

Eine möglichst ununterbrochene Betriebsweise zum Eintrag von elektromagnetischer Energie kann eine Projektionseinheit schonen und/oder den Aufbau der gesamten Vorrichtung vereinfachen. Ferner ist es möglich, die zum Aufbau eines dreidimensionalen Objekts erforderliche Datenmenge zu verringern und einen Rechenbedarf dafür zu reduzieren.

Erfindungsgemäßes Verfahren und erfindungsgemäße Vorrichtung können jeweils so flexibel ausgestaltet werden, daß zum Aufbau eines gesamten dreidimensionalen Objekts einerseits bestimmte, gegebenenfalls mehrere ununterbrochene Bestrahlungsphasen, andererseits jedoch auch mindestens eine Phase ohne oder mit reduzierter Bestrahlung der Bauebene eingeschlossen sein können. Die wie oben beschriebene Veränderung des besagten Abstands ist jedenfalls während der (den) ununterbrochenen Bestrahlungsphase(n), optional auch während der mindestens einen Phase ohne bzw. reduzierter Bestrahlung der Bauebene vorgesehen. Eine mindestens eine Phase bei reduzierter, ggf. sogar ohne Bestrahlung der Bauebene muß nicht, kann aber zum Beispiel genutzt werden für eine oder mehrere der folgenden Ausführungen oder Bedingungen:
- bei Änderung der bestrahlten Querschnittsfläche in der Bauebene,
- bei Änderung einer Belichtungsmaske pro Querschnittsfläche,
- bei Anwendung eines Verschlusses, und/oder
- zum Einsatz eines Glättungselements wie eines Wischers.

Die jeweilige Dauer der mindestens einen Phase ohne Bestrahlung der Bauebene kann, falls angewendet, kurz und vorzugsweise sehr kurz sein, beispielsweise bis maximal 10s, bevorzugt bis maximal 1s, weiter bevorzugt bis maximal 10ms und insbesondere bis maximal 1ms.

Ein weiterer Vorteil der Erfindung besteht jedoch darin, daß eine Unterbrechung der Bestrahlung nicht notwendigerweise durchgeführt werden muss und z.B. während der vorerwähnten Ausführungen oder Bedingungen weiter betrieben werden kann.

Eine Änderung des besagten Abstands kann während des Bauprozesses variabel eingestellt werden. Auf diese Weise kann der Grad der Durchhärtung, bevorzugt durch die Verfahrgeschwindigkeit in der Hauptbaurichtung wie der Z-Richtung, gesteuert werden.

Durch den kontinuierlichen Verfahrprozess in der Hauptbaurichtung wie der Z-Richtung können Bestandteile der Vorrichtung, wie Wischer oder ähnliches, Schichten-unabhängig eingesetzt werden. Im Unterschied zur herkömmlichen Bauweise können Bestandteile der Vorrichtung unter anderen Gesichtspunkten, die für den Bauprozeß bzw. das erzeugte dreidimensionale Objekt günstiger sind, eingesetzt werden, z.B. Länge in Z-Richtung mit gleicher Querschnittsfläche in der horizontalen (XY-) Bauebene.

Es kann ein optimierter Bestrahlungsprozess durchgeführt werden, bei dem erst dann eine neue Bestrahlungsmaske generiert bzw. verwendet wird, wenn die (XY-) Querschnittsfläche sich entlang der Z-Höhe/Position verändert.

Es kann mit einer beliebig hohen Auflösung in Z für die Belichtungsmasken gearbeitet werden, die in Abhängigkeit von der verfahrenen Z-Höhe nacheinander projiziert werden.

Um Fehler während des Bauprozesses, insbesondere beim Eintrag der elektromagnetischen Strahlung wie der Belichtung, zu vermeiden, ist es wichtig, das zu bestrahlende Baufeld, d.h. die jeweils momentan zu bestrahlende XY-Querschnittsfläche oder XY-Teilquerschnittsfläche der Bauebene und vorzugsweise das gesamte Baufeld, simultan oder annähernd simultan zu bestrahlen.

Dies kann durch ein Projektionssystem mittels Maskenbestrahlung umgesetzt werden, was eine simultane Bestrahlung gewährleistet. Ein besonders bevorzugtes Projektionssystem zur Erzeugung einer Belichtungsmaske beruht auf Basis der an sich bekannten DLP^{®}/DMD^{®}-Technik.

Eine Alternative zur Maskenbestrahlung stellt eine Bestrahlung durch ein Projektionssystem dar, bei dem ein stehendes Bild oder ein nahezu stehendes Bild erzeugt wird und somit eine annähernd simultane Bestrahlung erreicht wird, beispielsweise durch ein Laser-basiertes Projektionssystem mit einem ausreichend schnellen Abscannen des gewünschten zu bestrahlenden Baufeldes in der Bauebene. Eine annähernd simultane Bestrahlung bzw. ein ausreichend schnelles Abscannen ist typischerweise dann erreicht, wenn ein für ein menschliches Auge stehendes oder nahezu stehendes Bild erzeugt wird. Geeignete Bereiche von Bildfrequenzen oder Bildwiederholfrequenzen, um ein für ein menschliches Auge stehendes oder nahezu stehendes Bild zu erzeugen, sind aus Videotechniken und Projektionstechniken bekannt und können entsprechend angewandt werden. Ein Beispiel eines Projektionssystems unter Verwendung eines für ein menschliches Auge stehendes Bild wird beschrieben in WO 01/14125 A1; jedoch ist die vorliegende Erfindung keinesfalls auf die Anwendung eines solchen Projektionssystems zur Bereitstellung einer annähernd simultanen Bestrahlung beschränkt.

Als photopolymerisierbares oder verfestigbares Material wird erfindungsgemäß irgendein Material verstanden, das einen Kunststoff und gegebenenfalls weitere Bestandteile umfassen kann und mittels Eintrag von elektromagnetischer Strahlung wie z.B. UV-Strahlung, sichtbarem Licht, IR-Strahlung, Elektronenstahlung, Röntgenstrahlung oder dergleichen verfestigbar ist. Geeigneterweise kann ein Material verwendet werden, das durch UV-Strahlung und/oder sichtbares Licht polymerisierbar ist, z.B. ein Material, das einen Kunststoff umfaßt, der mindestens eine ethylenisch ungesättigte Verbindung (einschließlich (Meth)Acrylat-Monomere und -Polymere) und/oder mindestens eine Epoxidgrupppe enthält. Geeignete weitere Zusatzstoffe des verfestigbaren Materials sind zum Beispiel anorganische und/oder organische Füllstoffe, Farbmittel, Viskose-einstellende Mittel, sind aber nicht darauf beschränkt.

Als Glättungselement kann ein Wischer, ein Streifer, eine Rolle, ein Schieber oder dergleichen eingesetzt werden. Bevorzugt wird ein "Docter-Blade"-Verfahren, bei dem eine Vakuum-Kammer als Hilfs-Materialreservoir dient und über die Oberfläche "wischt", oder das bekannte "Curtain-Coating" Verfahren.

Das erfindungsgemäße System erlaubt die Bereitstellung eines dreidimensionalen Objekts, das aus einem durch elektromagnetische Strahlung photopolymerisierten Material gebildet wurde, indem es durch kontinuierlichen Materialaufbau photopolymerisiert ist, ohne dass separat polymerisierte Strukturelemente wie Schichten, Punkte oder Stränge des photopolymerisierbaren Materials gebildet würden. Das erfindungsgemäß-bereitgestellte dreidimensionale Objekt unterscheidet sich somit von herkömmlichen dreidimensionalen Objekten, die durch andere Freiformtechniken erhalten wurden, insbesondere durch die Photopolymerisation in Masse ohne Grenzflächen zwischen getrennt gehärteten Bereichen des photopolymerisierbaren Materials. Anders als bei der herkömmlichen Stereolithographie oder anderen herkömmlichen Freiformtechniken wie dem selektiven Lasersintern, der ballistischen Teilchenherstellung, dem Fusionsabscheidungsmodellieren, dem dreidimensionalen Drucken, dem dreidimensionalen Plotten oder weitere Rapid Prototyping Verfahren können erfindungsgemäß über einen ununterbrochenen Stereolithographieprozeß ohne Schichten- oder Strangbildung dreidimensionalen Objekte bereitgestellt werden, die keine separaten Schichten oder einzelne Materialstränge oder -punkte aufweisen. Das erfindungsgemäße Technik ist besonders geeignet zur Bereitstellung eines dreidimensionalen Objekts, das in Richtung des kontinuierlichen Materialaufbaus unterschiedliche Querschnittsflächen aufweist.

### Kurzbeschreibung der Zeichnungen

Die vorliegende Erfindung wird nachfolgend beispielhaft und nicht einschränkend anhand von Zeichnungen näher erläutert. In den Zeichnungen bedeuten:
Fig. 1 zeigt einen schematischen Grundaufbau eines Verfahrens bzw. einer Vorrichtung (im Querschnitt) gemäß einer bevorzugten Ausführungsform der vorliegenden Erfindung, in der von oben bestrahlt wird;
Fig. 2 zeigt einen schematischen Grundaufbau eines Verfahrens bzw. einer Vorrichtung (im Querschnitt) gemäß einer besonderen Betriebsweise in einer Ausführungsform, bei der während einer Bestrahlungsphase gleichzeitig ein Glättungselement betätigt wird; und
Fig. 3 zeigt einen schematischen Grundaufbau eines Verfahrens bzw. einer Vorrichtung (linke Seite im Querschnitt; rechte Seite perspektivisch) in einer Detailansicht gemäß einer weiter bevorzugten Ausführungsform der vorliegenden Erfindung.

### Beschreibung von bevorzugten Ausführungsformen

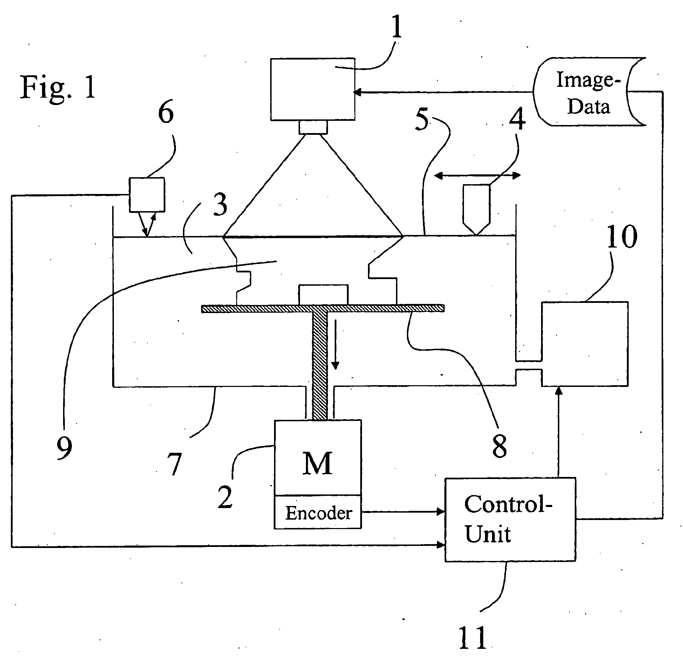

Die Anordnung in Fig. 1 zeigt schematisch im Querschnitt eine Ausführungsform der erfindungsgemäßen Vorrichtung für ein Rapid Prototyping Verfahren auf Basis der Photoverfestigung mittels Laser oder Maskenbelichtung mit Hilfe einer Projektionseinheit 1, wobei sich unterhalb der Projektionseinheit in einem Becken 7 das ein Photopolymer (photopolymerisierbarer Kunststoff) enthaltende, flüssige Material 3 mit einem Niveau der Oberfläche 5 des flüssigen Material 3 befindet. Hier bildet einfach die Oberfläche 5 des flüssigen Material 3 die Projektionsebene des projizierten Bilds und damit die Bauebene. Das flüssige oder zumindest fließfähige Material 3 kann durch ein flüssiges Photopolymer selbst, oder durch eine Mischung oder Lösung des Photopolymers mit einem Trägermaterial gebildet sein. In dem Becken und somit innerhalb des flüssigen Materials befindet sich eine Trägerplatte 8, die in vertikaler Richtung bewegt werden kann. Die Position der Trägerplatte 8 in Z ist zu jedem Zeitpunkt entweder durch einen Encoder oder durch den Einsatz eines Schrittmotors bekannt und kann über die Kontroll-Einheit 11 gesteuert werden. In dieser Ausführungsform wird die Füllhöhe des Materials während des Bauprozesse konstant gehalten. Die Füllhöhe kann mit einem Füllstandssensor 6 ermittelt und über ein Reservoir 10, in dem weiteres flüssiges Polymermaterial 3 enthalten ist, nachreguliert werden.

Die Trägerplatte 8 (mit dem generierten Objekt) wird kontinuierlich unter die Materialoberfläche gefahren, wobei die Tiefenhärtung des selektiv belichteten Photopolymers durch die Verfahrgeschwindigkeit gesteuert werden kann.

Ein Wischer 4 kann in einer definierten Höhe über der Bauebene bzw. Materialoberfläche horizontal bewegt oder eingebracht werden, um während des kontinuierlichen Generierens eine möglicherweise auftretende konvexe oder konkave Wölbung des Materials in der Bauebene (z.B. positiver oder negativer Meniskus) zu eliminieren und eine planare oder im wesentlichen planare Bauebene wieder herzustellen.

Während des kontinuierlichen Verfahrens der Trägerplatte kann die Belichtung unterbrochen werden, z.B. während einer Betätigung des Wischers oder während eines neuen Bildaufbaus. Eine vollständige Unterbrechung oder eine teilweise Reduzierung der Bestrahlung kann vorzugsweise durch einen Verschluß, z.B. durch ein elektromechanisches Element (nicht gezeigt) innerhalb des Strahlengangs umgesetzt werden, oder bei dem Einsatz von Projektionssystemen durch Verändern oder Einstellen der Helligkeits- und Kontrast-Parameter der bildgebenden Einheit realisiert werden.

In dieser bevorzugten Ausführungsform wird während des gesamten Bauprozesses die Trägerplatte kontinuierlich von der Bauebene weg mit konstanter oder variabler Geschwindigkeit verfahren. Die Veränderung der Verfahrgeschwindigkeit beeinflusst dabei den Durchhärtegrad des lichthärtenden Kunsstoffs und kann während des Bauprozesses gezielt gesteuert/geregelt werden, um z.B in einem Bauabschnitt eine Unter- oder Überbelichtung zu erreichen.

Durch das Absenken des generierten Objektes auf der Trägerplattform von der Bauebene weg, unterhalb der Materialoberfläche, fließt neues, frisches, noch nicht anpolymerisiertes Material von außen nach und füllt den abgesenkten Bereich aus.

Dieses Nachfließen, bzw. der Materialauftrag kann periodisch oder alternierend durch einen Wischer unterstützt werden.

Durch die alternierende oder periodische horizontale Bewegung oder Einbringung eines Streifers, Wischers oder Schiebers in einer definierten Höhe über der Bauebene bzw. Materialoberfläche kann ebenso dazu genutzt werden, eine während des kontinuierlichen Generierens auftretende konvexe oder konkave Wölbung des Materials in der Bauebene (z.B. positiver oder negativer Meniskus) zu eliminieren und eine planare oder im wesentlichen planare Bauebene wieder herzustellen.

Im Falle einer Unterbrechung der Bestrahlung, z.B. zum Zweck eines neuen Bildaufbaus und/oder der Bewegung des Wischers, kann die Verfahrgeschwindigkeit der Trägerplattform auf ein Minimum reduziert werden.

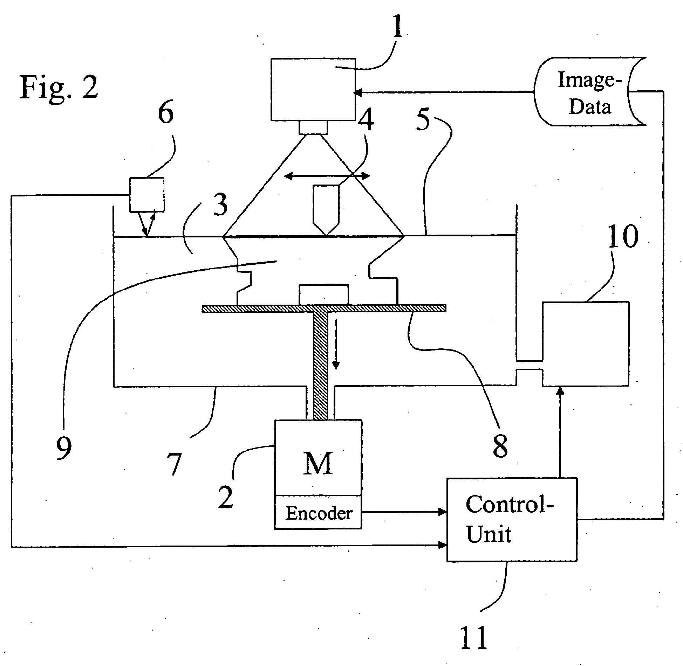

Eine besondere Betriebsweise ist in Fig. 2 gezeigt, die zwar bezüglich Verfahren und Vorrichtung - mit jeweils durch entsprechende Bezugszeichen gezeigten gleichen Bestandteilen - demjenigen der Fig. 1 entspricht, die jedoch die Besonderheit speziell veranschaulicht, daß der Wischer 4 alternierend zu gewünschten Zeitpunkten oder periodisch gleichzeitig während einer Bestrahlungsphase betätigt wird und die Materialoberfläche in der Bauebene glättet. Diese Betriebsweise erlaubt ein kontinuierliches Verfahren ohne Unterbrechung der Bestrahlung, ggf. mit Ausnahme von eventuell für einen neuen Bildaufbau bzw. für das Generieren einer neuen Bestrahlungsmaske erforderlichen kurzen Unterbrechung der Bestrahlung. Bei Bedarf könnten aber auch bei der Betriebsweise nach Fig. 2 zusätzliche Wischanwendungen während optionalen Unterbrechungen der Bestrahlung durchgeführt werden.

Die in Fig. 1 und Fig. 2 dargestellten Ausführungsformen können modifiziert werden. Anstatt daß wie in Fig.1 und 2 einfach die Oberfläche 5 des Photopolymer-Materials 3 die Bauebene definiert, kann zum Beispiel in der Bauebene, in die das Bestrahlungsbild projiziert wird, eine Referenzebene vorgesehen sein. Ferner kann, ergänzend zur Bewegung der Trägerplatte 8 oder statt dessen, die Veränderung des Abstands zwischen Trägerplatte und Bauebene durch ein Anheben des Niveaus (bei 5) bewirkt werden. Dieses Anheben kann durch den Füllstandssensor 6, das Material-Reservoir 10 und die Kontroll-Einheit 11 überwacht und gesteuert werden.

Ferner kann statt einer Belichtung von oben wie in Fig. 1 gezeigt eine inverse Anordnung vorgesehen werden, wobei dann eine Belichtung von unten erfolgt und die oben angeordnete Trägerplatte sich nach oben weg bewegt. Füllstandssensor 6 und Wischer 4 sind bei dieser modifizierten Ausführungsform entbehrlich.

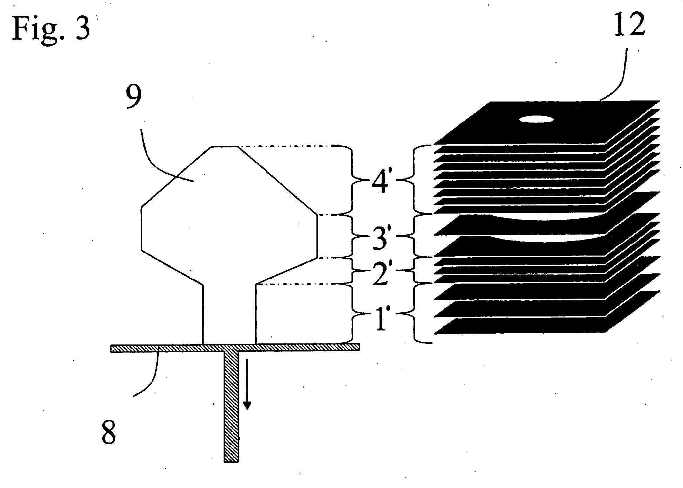

In Fig. 3 wird in einer Detailansicht bezüglich einer weiter bevorzugten Ausführungsform veranschaulicht, daß die vorliegende Erfindung eine sehr variable und dennoch sehr einfache Technik zur Herstellung eines dreidimensionalen Objekts ohne Schichten ermöglicht. Analog Fig. 1 und 2 sind mit den Bezugszeichen 8 und 9 die sich nach unten, von der Bauebene 5 weg bewegende Trägerplattform bzw. das darauf kontinuierlich generierte dreidimensionale Objekt 9 gezeigt. Mit den Abschnitten 1', 2', 3' und 4' sind besondere Baubereiche des dreidimensionalen Objekts 9 bezeichnet. Schematisch angedeutet sind jeweils Bitmaps 12 für den Bildaufbau der bildgebenden Einheit 1, die den entsprechenden Abschnitten 1', 2', 3' und 4' zugeordnet sind. Auf diese Weise wird durch diese beispielhafte Zuordnung prinzipiell veranschaulicht, daß für Bereiche 1', 3' des dreidimensionalen Objekts 9, bei denen sich die Außenumrisse praktisch nicht ändern, eine relativ geringe Anzahl und ggf. jeweils sogar nur eine Bitmap 12 erforderlich sind, wohingegen für Bereiche 2',4', bei denen sich die Außenumrisse ändern, eine relativ hohe Anzahl von Bitmaps 12 erforderlich sind. Auch die Verfahrgeschwindigkeit der Trägerplattform kann auf die jeweiligen Bereiche selektiv angepaßt werden, um praktisch schichtenfreie Bereiche zu generieren. So können zum Beispiel für die strukturell einfachen Bereiche 1',3' eine relativ hohe Verfahrgeschwindigkeit, für die strukturell komplizierten Bereiche 2',4' demgegenüber jedoch eine relativ niedrige Verfahrgeschwindigkeit gewählt werden.

Die obige Beschreibung der bevorzugten Ausführungsformen erfolgte lediglich beispielhaft zur Erläuterung; vielmehr sind beliebige Variationen und Kombinationen der beschriebenen Merkmale und Vorteile im Rahmen der Erfindung möglich.

## Patentansprüche

1. Verfahren zur Herstellung mindestens eines dreidimensionalen Objekts, wobei das Verfahren ein Verfestigen eines photopolymerisierbaren Materials durch simultanes oder annähernd simultanes Bestrahlen eines Baufeldes oder Teilbaufeldes in einer Bauebene mittels elektromagnetischer Strahlung umfasst, wobei der Aufbau des gesamten dreidimensionalen Objekts einschließt:
mindestens eine Bestrahlungsphase, bei der ein Abstand zwischen einer Trägerplattform, an der das zu generierende Objekt aufgebaut wird, und der Bauebeneverändertwird, **dadurch gekennzeichnet, dass** der Aufban ferner mindestens eine Phase umbasst, in der ein Eintrag von elektromagnetischer Strahlung in die Bauebene unterbrochen ist, aber weiter der Abstand zwischen der Trägerplattform und der Bauebene verändert wird.

2. Verfahren nach Anspruch 1, **dadurch gekennzeichnet, dass** das photopolymerisierbare Material in ein Becken vorgelegt wird und dass der Füllstand des unpolymerisierten Materials im Becken während des Bauvorganges konstant gehalten wird.

3. Verfahren zur Herstellung mindestens eines dreidimensionalen Objekts, wobei das Verfahren ein Verfestigen eines photopolymerisierbaren Materials durch simultanes oder annähernd simultanes Bestrahlen einer Bauebene mittels elektromagnetischer Strahlung umfasst, **dadurch gekennzeichnet, dass** eine momentane Durchhärtetiefe des photopolymerisierbaren Materials während eines Bauabschnittes durch eine Verfahrgeschwindigkeit der das zu generierende Objekt tragenden Trägerplattform von der Bauebene weg gesteuert wird.

4. Verfahren nach einem der vorangehenden Ansprüche, **dadurch gekennzeichnet, dass** die Belichtung des photopolymerisierbaren Materials über eine Maskenbelichtung mittels eines Projektionssystems durchgeführt wird.

5. Verfahren nach Anspruch 4, **dadurch gekennzeichnet, dass** das Projektionssystem zur Erzeugung einer Belichtungsmaske auf der Basis der DLP/DMD-Technik beruht.

6. Verfahren nach Anspruch 4 oder 5, **dadurch gekennzeichnet, dass** während einer Unterbrechung des Eintrags von elektromagnetischer Strahlung in die Bauebene eine Verfahrgeschwindigkeit der Trägerplattform auf ein Minimum reduziert wird.

7. Vorrichtung zur Herstellung mindestens eines dreidimensionalen Objekts durch Verfestigen eines photopolymerisierbaren Materials, umfassend:
eine Einrichtung zum simultanen oder annähernd simultanen Eintrag von elektromagnetischer Energie auf ein Baufeld oder Teilbaufeld in einer Bauebene mittels elektromagnetischer Strahlung;
eine Trägerplattform, die das zu generierende Objekt tragen kann; und
eine Steuereinrichtung, die darauf angepaßt ist, die Einrichtung zum Eintrag von elektromagnetischer Energie so zu steuern, dass ein Abstand zwischen der Trägerplattform und der Bauebene während mindestens einer Bestrahlungsphase verändert wird, **dadurch gekennzeichnet, daß** ein Aktuator für die Trägerplattform durch die Steuereinrichtung so ansteuerbar ist, dass die Verfahrgeschwindigkeit der Trägerplattform weg von der Bauebene variabel ist.

8. Vorrichtung zur Herstellung eines dreidimensionalen Objekts durch Verfestigen eines photopolymerisierbaren Materials, umfassend:
eine Einrichtung zum simultanen oder annähernd simultanen Eintrag von elektromagnetischer Energie in eine Bauebene mittels elektromagnetischer Strahlung; und eine Steuereinrichtung, die darauf angepaßt ist, die Einrichtung zum Eintrag von elektromagnetischer Energie so zu steuern, dass das dreidimensionale Objekt in einer Hauptbaurichtung während einer Bestrahlungsphase verfestigt wird, ohne den Eintrag von elektromagnetischer Energie während der Bestrahlungsphase zu unterbrechen,
**dadurch gekennzeichnet, dass** die Steuereinrichtung darauf angepaßt ist, die Einrichtung zum Eintrag von elektromagnetischer Energie so zu steuern, dass die Verfestigung über eine festgelegte momentane Durchhärtetiefe des photopolymerisierbaren Materials hinaus erfolgt, und dass die Steuereinrichtung ferner darauf angepaßt ist, dass während des Aufbaus des gesamten dreidimensionalen Objekts ferner eine Phase eingeschlossen ist, bei der die Einrichtung zum Eintrag von elektromagnetischer Energie oder einen Verschluss so gesteuert ist, dass der Eintrag von elektromagnetischer Energie auf das Baufeld in der Bauebene unterbrochen ist während eines ununterbrochenen Verfahrens der Trägerplatte von der Bauebene.

9. Vorrichtung nach Anspruch 7 oder 8, ferner mit einem Glättungselement, der periodisch oder alternierend die Bauebene glättet.

10. Vorrichtung nach einem der Ansprüche 7 bis 9, **dadurch gekennzeichnet, dass** die Einrichtung zum simultanen oder annähernd simultanen Eintrag von elektromagnetischer Energie ein Projektionssystem zur Erzeugung einer Belichtungsmaske umfasst.

11. Vorrichtung gemäß einem der Ansprüche 7 bis 10, ferner mit
einem Füllstandsmesser zum Bestimmen des Füllstands eines mit dem photopolymerisierbaren Material füllbaren Beckens, und
einem Reservoir für weiteres photopolymerisierbares Material,
wobei die Steuereinrichtung durch Empfang von Informationen des Füllstandsmessers darauf angepaßt ist, das Reservoir so anzusteuern, dass photopolymerisierbares Material in das Becken abgegeben oder daraus entnommen wird.

## Claims

1. A process for producing at least one three-dimensional object, comprising the step of solidifying a photopolymerizable material by means of simultaneous or almost simultaneous exposure of a build area or partial build area in a building plane via electromagnetic radiation, wherein the building of the whole three-dimensional object includes:
at least one irradiation period, wherein a distance between a support plate, at which the object to be generated is built, and the building plane is changed,
**characterized in that** the building comprises at least one phase, in which a supply of electromagnetic irradiation into the building plane is interrupted, but the distance between the support plate and the building plane is further changed.

2. The process according to claim 1, wherein the photopolymerizable material is provided in a container, and that the fill level of the unpolymerized material within the container is kept constant during the building process.

3. A process for producing at least one three-dimensional object comprising the step of solidifying a photopolymerizable material by means of simultaneous or almost simultaneous exposure of a building plane via electromagnetic radiation, **characterized in that** a current curing depth of the photopolymerizable material during a building period is controlled by a speed of movement of the support plate supporting the object to be generated away from the building plane.

4. The process according to one of the previous claims, **characterized in that** the exposure of the photopolymerizable material is carried out by a mask exposure via a projection system.

5. The process according to claim 4, **characterized in that** the projection system for the generation of an exposure mask is based on a DLP/DMD-technique.

6. The process according to claim 4 or 5, **characterized in that** a speed of movement the support plate is reduced to a minimum during the interruption of supply of electromagnetic irradiation to the building plane,.

7. A device for producing at least one three-dimensional object by solidifying a photopolymerizable material, comprising:
a device for simultaneous or almost simultaneous supply of electromagnetic energy to a build area or partial build area in a building plane via electromagnetic radiation;
a support plate capable of supporting the object to be generated; and
a control unit adapted to control the device for supply of electromagnetic energy such that a distance between the support plate and the building plane is changed during at least one irradiation period, **characterized in that** an actuator for the support plate is controllable by the control unit such that the speed of movement of the support plate away from the building plane is variable.

8. A device for producing at least one three-dimensional object by solidifying a photopolymerizable material, comprising:
a device for simultaneous or almost simultaneous supply of electromagnetic energy to a build area via electromagnetic radiation; and
a control unit adapted to control the device for the supply of electromagnetic energy such that the three-dimensional object is solidified in a main building direction during an irradiation period without interrupting the supply of electromagnetic energy during the irradiation period,
**characterized in that** the control unit is adapted to control the device for the supply of electromagnetic energy so that the solidification proceeds beyond a prescribed current hardening depth of the photopolymerizable material and that the control unit is further adapted to further include a phase during the building of the whole three-dimensional object in which the device for the supply of electromagnetic energy or a shutter is controlled such that the supply of electromagnetic energy to the build area in the building plane is interrupted during a continuous movement of the support plate away from the building plane.

9. The device according to claim 7 or 8, further comprising a smoothening element which smoothens the building plane periodically or in an alternating manner.

10. The device according to one of claims 7 to 9, **characterized in that** the device for simultaneous or almost simultaneous supply of electromagnetic energy comprises a projection system for generating a projection mask.

11. The device according to claims 7 to 10, further with a fill-level sensor for determining the fill-level of a container fillable by the photopolymerizable material; and
a reservoir for further photopolymerizable material; wherein the control unit is adapted to control the reservoir such that photopolymerizable material is respectively discharged to the container, or withdrawn from the container by receiving information from the fill-level sensor.

## Revendications

1. Procédé de fabrication d'au moins un objet tridimensionnel, le procédé comprenant un durcissement d'une matière photopolymérisable par une irradiation simultanée ou sensiblement simultanée d'un champ de construction ou d'une partie de champ de construction dans un plan de construction au moyen d'un rayonnement électromagnétique, la construction de l'ensemble de l'objet tridimensionnel incluant :
au moins une phase d'irradiation lors de laquelle une distance entre une plateforme porteuse sur laquelle l'objet à produire est construit et le plan de construction est modifiée,
**caractérisé en ce que** la construction comprend aussi au moins une phase lors de laquelle une introduction de rayons électromagnétiques dans le plan de construction est interrompue mais la distance entre la plateforme porteuse et le plan de construction continue à être modifiée.

2. Procédé selon la revendication 1, **caractérisé en ce que** la matière photopolymérisable est placée dans une cuvette et **en ce que** le niveau de remplissage de la matière non polymérisée dans la cuvette est maintenu constant pendant l'opération de construction.

3. Procédé de fabrication d'au moins un objet tridimensionnel, le procédé comprenant un durcissement d'une matière photopolymérisable par une irradiation simultanée ou sensiblement simultanée d'un plan de construction au moyen d'un rayonnement électromagnétique, **caractérisé en ce qu'**une profondeur de durcissement de la matière photopolymérisable pendant une étape de construction est commandée par une vitesse de déplacement de la plateforme porteuse portant l'objet à produire et s'éloignant du plan de construction.

4. Procédé selon l'une des revendications précédentes, **caractérisé en ce que** l'exposition à la lumière de la matière photopolymérisable est effectuée par l'intermédiaire d'une exposition avec masque au moyen d'un système de projection.

5. Procédé selon la revendication 4, **caractérisé en ce que** le système de projection pour la production d'un masque d'exposition repose sur la base de la technique DLP/DMD.

6. Procédé selon la revendication 4 ou 5, **caractérisé en ce que**, pendant une interruption de l'introduction de rayons électromagnétiques dans le plan de construction, une vitesse de déplacement de la plateforme porteuse est réduite à un minimum.

7. Dispositif pour la fabrication d'au moins un objet tridimensionnel par durcissement d'une matière photopolymérisable, comprenant :
- un dispositif pour l'introduction simultanée ou sensiblement simultanée d'énergie électromagnétique sur un champ de construction ou une partie de champ de construction dans un plan de construction au moyen d'un rayonnement électromagnétique ;
- une plateforme porteuse qui peut porter l'objet à produire ; et
- un dispositif de commande qui est adapté pour commander le dispositif destiné à l'introduction d'énergie électromagnétique de telle sorte qu'une distance entre la plateforme porteuse et le plan de construction est modifiée pendant au moins une phase d'irradiation,
**caractérisé en ce qu'**un actionneur pour la plateforme porteuse peut être commandé par le dispositif de commande de telle sorte que la vitesse de déplacement de la plateforme porteuse s'éloignant du plan de construction est variable.

8. Dispositif pour la fabrication d'au moins un objet tridimensionnel par durcissement d'une matière photopolymérisable, comprenant :
- un dispositif pour l'introduction simultanée ou sensiblement simultanée d'énergie électromagnétique dans un plan de construction au moyen d'un rayonnement électromagnétique ; et
- un dispositif de commande qui est adapté pour commander le dispositif destiné à l'introduction d'énergie électromagnétique de telle sorte que l'objet tridimensionnel est durci dans une direction de construction principale pendant une phase d'irradiation sans interrompre l'introduction d'énergie électromagnétique pendant la phase d'irradiation,
**caractérisé en ce que** le dispositif de commande est adapté pour commander le dispositif destiné à l'introduction d'énergie électromagnétique de telle sorte que le durcissement s'effectue sur une profondeur de durcissement instantanée spécifiée de la matière photopolymérisable et **en ce que** le dispositif de commande est aussi adapté pour que, pendant la construction de l'ensemble de l'objet tridimensionnel, il y ait aussi une phase lors de laquelle le dispositif destiné à l'introduction d'énergie électromagnétique ou un obturateur est commandé de telle sorte que l'introduction d'énergie électromagnétique sur le champ de construction dans le plan de construction est interrompue pendant un déplacement ininterrompu de la plateforme porteuse s'éloignant du plan de construction.

9. Dispositif selon la revendication 7 ou 8, avec en plus un élément de lissage, qui lisse périodiquement ou en alternance le plan de construction.

10. Dispositif selon l'une des revendications 7 à 9, **caractérisé en ce que** le dispositif pour l'introduction simultanée ou sensiblement simultanée d'énergie électromagnétique comprend un système de projection pour la production d'un masque d'exposition.

11. Dispositif selon l'une des revendications 7 à 10, avec en plus
- un dispositif de mesure de niveau de remplissage pour déterminer le niveau de remplissage d'une cuvette pouvant être remplie de matière photopolymérisable, et
- un réservoir pour une matière photopolymérisable,
le dispositif de commande étant adapté, par la réception d'informations du dispositif de mesure de niveau de remplissage, pour commander le réservoir de telle sorte que de la matière photopolymérisable est ajoutée dans la cuvette ou retirée de celle-ci.
